(19) **Europäisches Patentamt / European Patent Office / Office européen des brevets**

(11) **EP 2 226 971 B1**

(12) **EUROPEAN PATENT SPECIFICATION**

(45) Date of publication and mention
of the grant of the patent:
**25.01.2012 Bulletin 2012/04**

(51) Int Cl.:
***H04L 12/26*** (2006.01)

(21) Application number: **09305207.4**

(22) Date of filing: **05.03.2009**

(54) **Method for estimating a round trip time of a packet flow**

Verfahren zur Berechnung der Umlaufzeit eines Paketflusses

Procédé pour estimer le temps d'un aller-retour d'un flux de paquets

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**08.09.2010 Bulletin 2010/36**

(73) Proprietors:
• **Alcatel Lucent**
**75008 Paris (FR)**
• **Inria Institut National de Recherche en Informatique et en Automatique**
**78150 Le Chesnay (FR)**

(72) Inventors:
• **Carra, Damiano**
**37060, Buttapietra (VR) (IT)**
• **Avrachenkov, Konstantin**
**06160, Juan Les Pins (FR)**
• **Alouf Huet, Sara**
**Antibes, 06600 (FR)**
• **Nain, Philippe**
**06130, Grasse (FR)**
• **Post, Georg**
**92620, La Ville du Bois (FR)**

(74) Representative: **Hervouet, Sylvie et al**
**Feray Lenne Conseil**
**Le Centralis**
**63, avenue du Général Leclerc**
**92340 Bourg-la-Reine (FR)**

(56) References cited:
• **RYAN LANCE; IAN FROMMER: "Round-trip time inference via passive monitoring" ACM SIGMETRICS PERFORMANCE EVALUATION REVIEW, [Online] vol. 33, no. 3, December 2005 (2005-12), pages 32-38, XP002529590 New York, NY, USA ISSN: 0163-5999 Retrieved from the Internet: URL:http://portal.acm.org/ft_ gateway.cfm?i d=1111581&type=pdf&coll=GUIDE&dl=GUIDE& CFI D=36581484&CFTOKEN=48616060> [retrieved on 2009-05-27]**
• **CRAIG PARTRIGE; DAVID COUSINS; ALDEN W. JACKSON; RAJESH KRISHNAN; TUSHAR SAXENA; W. TIMOTHY STRAYER: "Using signal processing to analyze wireless data traffic" BBN TECHNICAL MEMORANDUM NO. 1321, [Online] 22 May 2002 (2002-05-22), pages 1-12, XP002529591 Cambridge, MA 02138 Retrieved from the Internet: URL:http://www.ir.bbn.com/ documents/techme mos/TM1321.pdf> [retrieved on 2009-05-27]**
• **I. ANTONIOU; V. V. IVANOV; VALERY V. IVANOV; P.V. ZRELOV: "Statistical Model of Network Traffic" COMMUNICATION OF THE JOINT INSTITUTE FOR NUCLEAR RESEARCH, [Online] 15 November 2002 (2002-11-15), pages 1-40, XP002529592 141980 Dubna, Russia Retrieved from the Internet: URL:http://wwwinfo.jinr.ru/ publish/Preprin ts/2002/222(E11-2002-222).pdf> [retrieved on 2009-05-27]**

**Description**

The technical domain of the invention is the domain of communication networks, and particularly the transmission packet stream between a given pair of addresses and ports.

The increasing demand on quality of service in packet transport networks have motivated the introduction of techniques for traffic control by flows. Among these, the elastic flows for large data transfers compete for the bandwidth on bottleneck links, increasing their rates until there is a negative feedback from congestion, where packets are then marked or dropped. Conventional routers that are not flow-aware have a difficult task to insure fairness under high traffic loads.

Flows that pass through a router are nowadays treated agnostically, i.e. without knowing their characteristics such as the rate and its growth. Knowing the growth rate of flows means being able to design novel queue management schemes, where a router can predict future congestion events and act in advance. The growth rate of a connection depends on the value of its round trip time, RTT, i.e. the time between the issue of a packet and the arrival of its acknowledgement. Therefore the estimation of the RTT represents an important building block for routers.

The present document addresses the following issue: evaluation of an RTT of a flow by passively monitoring in real-time only one direction of the flow. The estimation has to be passive, since the router cannot inject packets into an existing flow. The estimation has to be real-time since the growth rate of a flow must be available at the router instantaneously. Finally the estimation has to use the packets of one direction only, either the packets sent or their acknowledgements, since the router has not access to both directions.

The capability to track in real-time the round-trip time of high-volume packet flows is a valuable building block for an optimal fair congestion control in a router.

Among the prior art existing solutions some are active solutions.

Most of the prior art solutions are based on the observation of the two-way traffic, which is infeasible in a core router.

To the best of our knowledge, there are only two papers which propose a general framework for the passive estimation of the RTT, but they are not focused on real-time estimation.

Y.Zhang, L.Breslau, V.Paxson, and S.Shenker in "On the Characteristics and Origins of Internet Flow Rates," in Proc. of ACM SIGCOMM, Pittsburgh, PA, USA, Aug. 2002, propose a method based on time correlation of samples. But the retained approach lacks of robustness: the results are strongly affected by the noise, which impacts the accuracy of the RTT estimation.

R.Lance, I.Frommer, B.Hunt, E.Ott, J.A.Yorke, and E.Harder in "Round-trip time inference via passive monitoring," in ACM Sigmetrics Performance Evaluation Review, Vol. 33, Issue 3, Dec. 2005, pp 32-38, make use of a spectral analysis as one of the possible steps for off-line estimation of the RTT. In particular, the authors apply a spectral analysis to a set of samples, but they do not consider the continuous real-time update of the spectrum as a new sample arrives. Moreover, the details of the extraction of the RTT from the spectrum are not specified.

The present invention addresses and solves these problems and defines methods and computing devices that monitor packet flows in real time, in order to continuously estimate, among other useful metrics, a round-trip time, RTT, of an observed flow. In particular, the invention applies to flow-aware routers that use these RTT measurements in congestion control, for optimal fair packet mark and drop policies, and for active queue management purposes.

The object of the invention is a method, in a packet flow communication system, for estimating a round trip time, RTT, of an observed packet flow, that is the time between the issue of a packet and the arrival of its acknowledgement, comprising the steps of:

- collecting an inter-arrival time signal X between adjacent packets, where the amplitude $h_k$ of said signal X at instant $t_k$ of arrival of a packet is equal to the elapsed duration since the arrival time $t_{k-1}$ of a previous packet, that is $X(t_k) = h_k = t_k - t_{k-1}$,
- computing a periodogram $P_N$ based on N samples $h_1, h_2..h_N$ of said signal X, using a Lomb-Scargle method,
- extracting a fundamental pulsation $\omega_0$ out of said periodogram $P_N$ using a pattern matching technique,
- determining the RTT out of said fundamental pulsation.

According to another feature of the invention, the step of computing the periodogram $P_N$ comprises the steps of:

- computing a mean $\overline{h}$ and a variance $\sigma^2$ for the N samples $h_1, h_2..h_N$ using the formulas:

$$\overline{h} = \frac{1}{N}\sum_{i=1}^{N} h_i \quad \text{and} \quad \sigma^2 = \frac{1}{N-1}\sum_{i=1}^{N}\left(h_i - \overline{h}\right)^2 \ ,$$

- computing for 2N values of pulsation $\omega$ taken in a range $[\omega_1 , \omega_2]$:

  ○ a value $\tau$ for the N samples $h_1$, $h_2$..$h_N$ using the formula:

$$\tan(2\omega\tau) = \frac{\sum_{j=1}^{N}\sin 2\omega t_j}{\sum_{j=1}^{N}\cos 2\omega t_j} \ ,$$

  o the periodogram $P_N$ using the formula:

$$P_N(\omega) = \frac{1}{2\sigma^2}\left\{\frac{\left[\sum_{j=1}^{N}\left(h_j - \overline{h}\right)\cos\omega\left(t_j - \tau\right)\right]^2}{\sum_{j=1}^{N}\cos^2\omega\left(t_j - \tau\right)} + \frac{\left[\sum_{j=1}^{N}\left(h_j - \overline{h}\right)\sin\omega\left(t_j - \tau\right)\right]^2}{\sum_{j=1}^{N}\sin^2\omega\left(t_j - \tau\right)}\right\}$$

According to another feature of the invention, said method, further comprises, in real time, at each arrival of a new packet, the steps of:

- collecting a new sample $h_n$ of signal X,
- shifting the set of samples $h_1$, $h_2$ .. $h_N$ by:

  o discarding the oldest sample $h_1$, and
  o for k=1 .. N-1, $h_k = h_{k+1}$,
  o replacing $h_N$ by the new sample $h_n$,
  in order said set of samples still comprises the N most recent samples,

- updating the periodogram $P_N$ based on the N most recent samples $h_1$, $h_2$..$h_N$ of signal X,
- updating the RTT.

According to another feature of the invention, the step of updating the periodogram $P_N$ comprises the steps of:

- updating the mean $\overline{h}$ and variance $\sigma^2$ for the N samples $h_1$, $h_2$..$h_N$ using the formulas:

$$\overline{h} = \frac{1}{N}\sum_{i=1}^{N} h_i \quad \text{and} \quad \sigma^2 = \frac{1}{N-1}\sum_{i=1}^{N} h_i^2 - \frac{N}{N-1}\overline{h}^2 \ ,$$

- updating for 2N values of pulsation $\omega$ taken in a range $[\omega_1, \omega_2]$ :

  ○ the value $\tau$ for the N samples $h_1$, $h_2$..$h_N$ using the formula:

$$\tan(2\omega\tau) = \frac{\sum_{j=1}^{N} \sin 2\omega t_j}{\sum_{j=1}^{N} \cos 2\omega t_j},$$

o the values $\Phi$, $\Gamma$, $\Phi_2$, $\Gamma_2$ using the formulas:

$$\Phi = \sum_{j=1}^{N}\left(h_j - \overline{h}\right)\cos\omega t_j = \sum_{j=1}^{N} h_j \cos\omega t_j - \sum_{j=1}^{N} \overline{h}\cos\omega t_j$$

$$\Gamma = \sum_{j=1}^{N}\left(h_j - \overline{h}\right)\sin\omega t_j = \sum_{j=1}^{N} h_j \sin\omega t_j - \sum_{j=1}^{N} \overline{h}\sin\omega t_j$$

$$\Phi_2 = \sum_{j=1}^{N} \cos 2\omega t_j$$

$$\Gamma_2 = \sum_{j=1}^{N} \sin 2\omega t_j$$

o and then the periodogram $P_N$ using the formula:

$$P_N(\omega) = \frac{1}{2\sigma^2}\left\{\frac{\left[\Phi\cos\omega\tau + \Gamma\sin\omega\tau\right]^2}{\frac{N}{2} + \frac{1}{2}\Phi_2\cos 2\omega\tau + \frac{1}{2}\Gamma_2\sin 2\omega\tau} + \frac{\left[\Gamma\cos\omega\tau - \Phi\sin\omega\tau\right]^2}{\frac{N}{2} - \frac{1}{2}\Phi_2\cos 2\omega\tau - \frac{1}{2}\Gamma_2\sin 2\omega\tau}\right\}$$

According to another feature of the invention, N is greater than 200.

According to another feature of the invention the values of $\omega_1$ and $\omega_2$ are determined using the formulas:

$$T = \underset{k}{Max}\left(t_k\right) - \underset{k}{Min}\left(t_k\right), \quad \omega_1 = \frac{2\pi}{T}, \quad \text{and} \quad \omega_2 = \frac{N\pi}{T}$$

According to another feature of the invention the extracting step comprises:

- populating a list comprising the first W pulsation peaks corresponding to the W highest spectral powers $P_N$ of said periodogram and
- searching interactively for a pulsation, among the W pulsations, that is the least common divisor for the others pulsations, said pulsation being the fundamental pulsation $\omega_0$.

According to another feature of the invention a peak is determined at a pulsation $\omega_k$, if PN $(\omega_k) > P_N (\omega_{k-1})$ and PN $(\omega_k) > P_N(\omega_{k+1})$.

According to another feature of the invention the searching step comprises:

- ordering said list of W pulsations peaks,
- iterating, starting from the lowest pulsation:

o checking if said pulsation has at least two multiples in the list, then stop iterating and return said pulsation as the fundamental pulsation $\omega_0$,
o if not, steps to the next pulsation in the list.

According to another feature of the invention the method further comprises, before the extracting step, a step of smoothing the periodogram by applying a low pass filter.

According to another feature of the invention the method further comprises, after the extracting step, a step of filtering the extracted fundamental pulsation $\omega_0$ with respect to the history of previously extracted fundamental pulsations.

According to another feature of the invention the filtering step compares an average $\overline{\omega_0}$ of the previous fundamental pulsations to the last extracted fundamental pulsation $\omega_0$, returning the fundamental pulsation $\omega_0$ if it does not differ from the average $\overline{\omega_0}$ from a given percentage, returning the average $\overline{\omega_0}$ either.

Others features, details and advantages of the invention will become more apparent from the detailed illustrating description given hereafter with respect to the drawing on which:

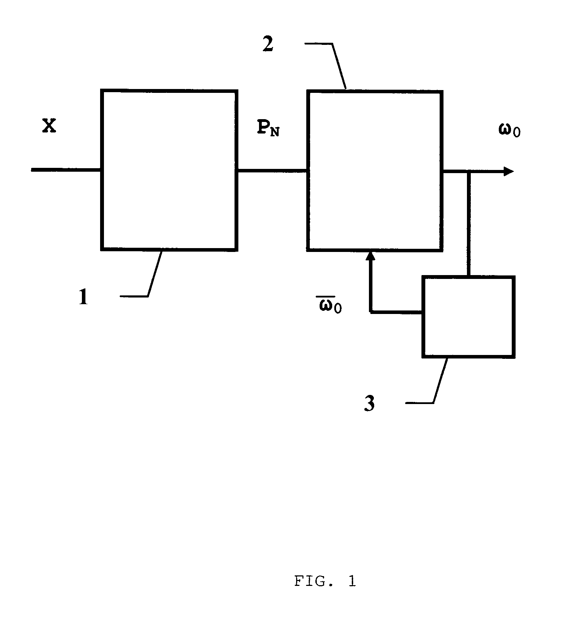

- figure 1 is a schema block of a method according to the invention.

According to figure 1, is presented the global architecture of a method, in a packet flow communication system, for estimating a round trip time, RTT, of an observed packet flow. Said RTT is defined as the time between the issue of a packet and the arrival of its acknowledgement.

Said estimating method, or a corresponding device implementing it, comprises two main steps/blocks. A first block 1 computes a periodogram $P_N$ out of a sampled signal X. A second block 2 then extracts out of said periodogram a fundamental pulsation $\omega_0$ from which the searched RTT can be calculated.

The signal X represents an inter-arrival time between adjacent packets. Said signal can be collected as packets arrive. Said signal is sampled at instant $t_k$ when the $k^{th}$ packet arrives. The amplitude $h_k$ of said signal X at instant $t_k$ of arrival of a packet is equal to the elapsed duration since the arrival time $t_{k-1}$ of a previous packet. X is then defined by the following formula $X(t_k) = h_k = t_k - t_{k-1}$.

A periodogram $P_N$ can be computed out of said signal X. A periodogram is a spectral analysis adapted to a sampled signal, giving for a given pulsation $\omega$ the corresponding value of spectral power $P_N(\omega)$. A common method to compute such a periodogram is the known Lomb-Scargle method.

Out of said periodogram, a fundamental pulsation $\omega_0$ can then be extracted. The period To corresponding to said fundamental pulsation $\omega_0$ is a time duration and is equal to the searched RTT, according to the formula

$$RTT = T_0 = \frac{1}{f_0} = \frac{2\pi}{\omega_0} \ .$$

According to the invention, said fundamental pulsation is extracted using a pattern matching technique.

Typically the periodogram $P_N$ is computed out of N samples $h_1, h_2..h_N$ of signal X and comprises a first step of:

- computing the mean $\overline{h}$ and variance $\sigma^2$ for the N samples $h_1, h_2 .. h_N$ using the formulas:

$$\overline{h} = \frac{1}{N}\sum_{i=1}^{N} h_i \ (1) \ \text{ and } \ \sigma^2 = \frac{1}{N-1}\sum_{i=1}^{N}\left(h_i - \overline{h}\right)^2 \ (2) \ .$$

According to a feature of the invention, the periodogram is computed over a given range of pulsation [w1,w2]. Since the periodogram is discrete, said range [w1,w2] is parted into a number P of sampling values. It has been observed that a good balance between accuracy and processing effort may be obtained, to compute a periodogram $P_N$ from N samples, with a number P of pulsation sampling values equal to $2_N$.

Then for each value of w, the $P_N$ computation comprises:

o a computation of a value t for the N samples using the formula:

$$\tan(2\omega\tau) = \frac{\sum_{j=1}^{N}\sin 2\omega t_j}{\sum_{j=1}^{N}\cos 2\omega t_j} \quad (3),$$

o a computation of the periodogram $P_N$ using the formula:

$$P_N(\omega) = \frac{1}{2\sigma^2}\left\{\frac{\left[\sum_{j=1}^{N}\left(h_j - \bar{h}\right)\cos\omega\left(t_j - \tau\right)\right]^2}{\sum_{j=1}^{N}\cos^2\omega\left(t_j - \tau\right)} + \frac{\left[\sum_{j=1}^{N}\left(h_j - \bar{h}\right)\sin\omega\left(t_j - \tau\right)\right]^2}{\sum_{j=1}^{N}\sin^2\omega\left(t_j - \tau\right)}\right\} \quad (4).$$

It has to be noted that N samples $h_k$ are necessary to apply the method. The method must then wait, during an initialisation phase, until the N first packets arrive, in order to provide an RTT result.

After that, the RTT may be re-estimated in real time, and a re-computation may occur each time a new packet arrives. Alternately a new computation may occur at every 2, 3 or n arrivals. At each arrival of a new packet, a new sample $h_n$ of signal X is collected. The set of samples $h_1$, $h_2$ .. $h_N$ is then shifted. The first sample $h_1$ which is the oldest sample is discarded. All former samples $h_2..h_N$ are shifted, that is their index is decreased by one. Former $h_2$ becomes the new $h_1$, and more generally former $h_{k+1}$ becomes the new $h_k$, for k=1..N-1. $h_N$ is replaced by the new sample $h_n$, so doing the set of samples $h_1$, $h_2..h_N$ at any time always comprises the N most recent samples.

Based on a set comprising the N most recent samples $h_1$, $h_2..h_N$ of signal X, the periodogram $P_N$ may be updated and then also the RTT.

The update of the periodogram may be done by applying the previous formulas (1) - (4) to the new set of samples $h_1$, $h_2..h_N$.

However a great saving in computing load may be expected in taking into account the fact, that from one computation to the next, only one sample $h_n$ differs, the N-1 other samples remaining the same. This can be profitably used in order not to compute again all of the sums from the scratch. Such computing are named "sliding" updates.

Thus the update of the periodogram $P_N$ may advantageously comprise the step of updating the mean $\bar{h}$ and variance $\sigma^2$ for the N samples $h_1$, $h_2$ .. hN using the formulas:

$$\bar{h} = \frac{1}{N}\sum_{i=1}^{N}h_i \quad (5) \quad \text{and} \quad \sigma^2 = \frac{1}{N-1}\sum_{i=1}^{N}h_i^2 - \frac{N}{N-1}\bar{h}^2 \quad (6).$$

The first formula (5) is the same as (1), but the sum of $h_i$ can be computed, instead of summing all the $h_i$, by taking into account the previous remark. Then, the new sum is equal to the former sum plus $h_n$ minus $h_1$. N-1 additions ($h_1$+$h_2$+..+$h_N$) are replaced by two additions, or more exactly one addition and one subtraction $\left(\sum_{i=1}^{N}h_i - h_1 + h_n\right).$

In the same way the new formula (6) for the variance saves computing load. The sum of $h_i^2$ can be computed instead of summing all the $h_i^2$, from the old sum of $h_i^2$, by adding $h_n^2$ and subtracting $h_1^2$ .

For 2N values of pulsation $\omega$ taken in a range [$\omega_1$, $\omega_2$ ]: the update of $\tau$ is done the same way as previously, using formula

$$\tan(2\omega\tau) = \frac{\sum_{j=1}^{N} \sin 2\omega t_j}{\sum_{j=1}^{N} \cos 2\omega t_j} \quad (7),$$

the same as (3).

Then the periodogram is computed taking into account the previous remark and some trigonometric properties. The values $\Phi$, $\Gamma$, $\Phi_2$, $\Gamma_2$ are first computed for each pulsation $\omega$ using the formulas:

$$\Phi = \sum_{j=1}^{N} \left(h_j - \overline{h}\right)\cos\omega t_j = \sum_{j=1}^{N} h_j \cos\omega t_j - \sum_{j=1}^{N} \overline{h}\cos\omega t_j \quad (8)$$

$$\Gamma = \sum_{j=1}^{N} \left(h_j - \overline{h}\right)\sin\omega t_j = \sum_{j=1}^{N} h_j \sin\omega t_j - \sum_{j=1}^{N} \overline{h}\sin\omega t_j \quad (9)$$

$$\Phi_2 = \sum_{j=1}^{N} \cos 2\omega t_j \quad (10)$$

$$\Gamma_2 = \sum_{j=1}^{N} \sin 2\omega t_j \quad (11)$$

and then the periodogram $P_N$ using the formula (12):

$$P_N(\omega) = \frac{1}{2\sigma^2}\left\{ \frac{\left[\Phi\cos\omega\tau + \Gamma\sin\omega\tau\right]^2}{\dfrac{N}{2} + \dfrac{1}{2}\Phi_2\cos 2\omega\tau + \dfrac{1}{2}\Gamma_2\sin 2\omega\tau} + \frac{\left[\Gamma\cos\omega\tau - \Phi\sin\omega\tau\right]^2}{\dfrac{N}{2} - \dfrac{1}{2}\Phi_2\cos 2\omega\tau - \dfrac{1}{2}\Gamma_2\sin 2\omega\tau} \right\}$$

As is apparent from the description above, the algorithm involves a certain number of sum terms that are updated in the manner of a "sliding average". The equations imply the use of a "box" envelope for summing exactly N samples, necessitating the storage of all N summands to enable incremental updates.

Using less storage, other "sliding" update techniques can also be used, with varying degrees of approximation or of averaging in time. For example, in formulae derived from "exponential" averaging, only the preceding sum is required in memory.

More general kinds of digital filters (e.g, infinite-impulse-response or auto-regressive-moving-average) only require the memory of very few previous result and input values. The one skilled in the art would take benefice of analogically applying here all the enveloping techniques called "apodization" in the practice of Fourier transforms.

The formulas and sliding techniques used for updating provide an algorithm that only requires O(N) operations at each sample arrival.

The preceding methods appear to function correctly with a number of samples N greater than 200. Lower values of N would lead to a noise too high. A value of N equal to 256 appears to work fine.

In order to compute $\tau$ and $P_N$, a range $[\omega_1, \omega_2]$ must be determined. This is done by examining the extreme values of the time $t_k$. A total duration T is then computed using the formula: $T = \underset{k}{Max}(t_k) - \underset{k}{Min}(t_k)$. The range

limits are then determined using the formulas: $\omega_1 = \dfrac{2\pi}{T}$, and $\omega_2 = \dfrac{N\pi}{T}$.

Alternately, $\omega_1$ and $\omega_2$ may be determined arbitrarily or after the characteristics of the observed flow, its usual highest and lowest values among $t_k$ being respectively taken to determine $\omega_1$ and $\omega_2$.

Another interesting mean to save computing load is by tabulating the trigonometric functions sine and cosine, since they are extensively used. A table may typically store pre computed pairs of values [angle $\alpha$, value of $\sin\alpha$, respectively $\cos\alpha$]. A value $\sin\alpha'$, respectively $\cos\alpha'$ of a given angle $\alpha'$ being determined by taking the value $\sin\alpha$, respectively $\cos\alpha$, of the pair corresponding to the value $\alpha$ closest to $\alpha'$. Classical interpolation techniques may also be used, but taking the closest value is the least consuming method.

Starting from said periodogram, whatever the method used to obtain it, the method according to the invention then proceeds to the extraction of a fundamental pulsation $\omega_0$.

Said extracting step may comprise:

- populating a list comprising the first W pulsation peaks corresponding to the W highest spectral powers $P_N$ of said periodogram and
- searching interactively for a pulsation, among the W pulsations, that is a least common divisor for the others pulsations, said pulsation being the fundamental pulsation $\omega_0$.

While populating said peak list, a pulsation $\omega$ among the 2N values in the range $[\omega_1, \omega_2]$ is determined to be a peak pulsation when its spectral power tops the spectral powers of its neighbours. That is, pulsation $\omega_k$ is a pulsation peak if $P_N(\omega_k) > P_N(\omega_{k-1})$ and $PN(\omega_k) > P_N(\omega_{k+1})$, the index k describing 1..2N.

Said peak list can also be pruned by discarding pulsation peaks out of a range determined by a high boundary

$\omega_{max}$ and a low boundary $\omega_{min}$. Said boundaries are determined by the $\omega = \dfrac{2\pi}{RTT}$ formula to correspond to extreme RTT values considered unreachable or not interesting. For example the high boundary $\omega_{max}$ may be chosen to correspond to a minimum value of RTT of 2ms, and the low boundary $\omega_{min}$ may be chosen to correspond to a maximum value of RTT of 500ms.

Said peak list may advantageously be ordered by pulsation value, for example smallest first, to ease the search.

The searching step comprises, for each pulsation taken from the smallest to the highest, checking if said pulsation has at least two multiples in the list, that is, two multiples that are also among the highest peak pulsations. If yes, stop the search and return said pulsation as the fundamental pulsation $\omega_0$. That is, the fundamental pulsation $\omega_0$ is the lowest of the W highest peak pulsations that has at least two multiples in said peak list.

If said pulsation has not at least two multiples, then the next pulsation of the list is checked for at least two multiples, and then until the end of the list or a fundamental pulsation is found. It thus may happen cases where the process does not find any fundamental pulsation.

As is apparent, said algorithm is a pattern-matching algorithm that extracts a best-fitting combination of harmonics from a frequency spectrum. Many other pattern-matching procedures, either derived from the above, or available as prior art, can also be used.

Since the periodogram $P_N$ may generally be noisy, a smoothing step is advantageously applied to the periodogram, after its computation, and before the extracting. Said smoothing step may be done by applying a low pass filter.

As a conservative measure, an additional filtering step, as figured by block 3 in figure 1, may be added. Said filtering step may check the extracted fundamental pulsation $\omega_0$ with respect to the history of previously extracted fundamental pulsation.

This may for example take the form of a comparison between an average $\overline{\omega_0}$ of the previous fundamental pulsations and the last extracted fundamental pulsation $\omega_0$, returning the fundamental pulsation $\omega_0$ if it does not differ from the average $\overline{\omega_0}$ from a given percentage, returning the average $\overline{\omega_0}$ instead. Said average may be computed slidingly.

A satisfying percentage is 50%. If $0,5 < \dfrac{\omega_0}{\overline{\omega_0}} < 1,5$, then $\omega_0$ is returned.

If not, $\overline{\omega_0}$ is returned instead.

The algorithm functions quite well with a number W of pulsation peaks in the peak list equal to 10.

The estimation of the RTT with the previously described techniques is fast enough for wire-speed on router ports. Such an estimating method represents an enabler for the design of novel technique of flow control. With such a real time RTT information, routers have a better control on the flows. They then can provide fairness, and, indirectly, an improved user experience. Moreover, the flow control schemes that can be designed starting from the estimation of the RTT can be completely self-configurable: no management intervention is required, since the estimation of the flow adaptively adjusts the available bandwidth for the flow. The new proposed schemes are fully compatible and inter-operable with all existing routers and TCP-type end-to-end protocols. No new protocols or signaling messages is needed.

**Claims**

1. A method, for a packet flow communication system, for estimating a round trip time, RTT, of an observed packet flow, that is the time between the issue of a packet and the arrival of its acknowledgement, comprising the steps of:

- collecting an inter-arrival time signal X between adjacent packets, where the amplitude $h_k$ of said signal X at instant $t_k$ of arrival of a packet is equal to the elapsed duration since the arrival time $t_{k-1}$ of a previous packet, that is $X(t_k) = h_k = t_k - t_{k-1}$,
- computing a periodogram $P_N$ based on N samples $h_1, h_2..h_N$ of said signal X, using a Lomb-Scargle method, by:

o computing a mean $\bar{h}$ and a variance $\sigma^2$ for the N samples $h_1, h_2..h_N$ using the formulas:

$$\bar{h} = \frac{1}{N}\sum_{i=1}^{N} h_i \quad \text{and} \quad \sigma^2 = \frac{1}{N-1}\sum_{i=1}^{N}\left(h_i - \bar{h}\right)^2 ,$$

o computing for 2N values of pulsation $\omega$ taken in a range $[\omega_1, \omega_2]$:

■ a value $\tau$ for the N samples $h_1, h_2..h_N$ using the formula:

$$\tan(2\omega\tau) = \frac{\sum_{j=1}^{N} \sin 2\omega t_j}{\sum_{j=1}^{N} \cos 2\omega t_j} ,$$

■ the periodogram $P_N$ using the formula:

$$P_N(\omega) = \frac{1}{2\sigma^2}\left\{ \frac{\left[\sum_{j=1}^{N}\left(h_j - \bar{h}\right)\cos\omega(t_j - \tau)\right]^2}{\sum_{j=1}^{N}\cos^2\omega(t_j - \tau)} + \frac{\left[\sum_{j=1}^{N}\left(h_j - \bar{h}\right)\sin\omega(t_j - \tau)\right]^2}{\sum_{j=1}^{N}\sin^2\omega(t_j - \tau)} \right\}$$

- extracting a fundamental pulsation $\omega_0$ out of said periodogram $P_N$ using a pattern matching technique,
- determining the RTT out of said fundamental pulsation $\omega_0$,
*characterized in that* it further comprises, in real time, at each arrival of a new packet, the steps of:
- collecting a new sample $h_n$ of signal X,
- shifting the set of samples $h_1, h_2..h_N$ by:

o discarding the oldest sample $h_1$, and
o for k=1..N-1, $h_k = h_{k+1}$.
o replacing $h_N$ by the new sample $h_n$,

in order said set of samples still comprises the N most recent samples,

- updating the periodogram $P_N$ based on the N most recent samples $h_1$, $h_2$..$h_N$ of signal X by:

  o updating the mean $\bar{h}$ and variance $\sigma^2$ for the N samples $h_1$, $h_2$..$h_N$ using the formulas:

$$\bar{h} = \frac{1}{N}\sum_{i=1}^{N} h_i \quad \text{and} \quad \sigma^2 = \frac{1}{N-1}\sum_{i=1}^{N} h_i^2 - \frac{N}{N-1}\bar{h}^2 \; ,$$

  ○ updating for 2N values of pulsation $\omega$ taken in a range $[\omega_1, \omega_2]$:

   ■ the value $\tau$ for the N samples $h_1$, $h_2$ .. hN using the formula:

$$\tan(2\omega\tau) = \frac{\sum_{j=1}^{N} \sin 2\omega t_j}{\sum_{j=1}^{N} \cos 2\omega t_j} \; ,$$

   ■ the values $\Phi$, $\Gamma$, $\Phi_2$, $\Gamma_2$ using the formulas:

$$\Phi = \sum_{j=1}^{N}\left(h_j - \bar{h}\right)\cos\omega t_j = \sum_{j=1}^{N} h_j \cos\omega t_j - \sum_{j=1}^{N}\bar{h}\cos\omega t_j$$

$$\Gamma = \sum_{j=1}^{N}\left(h_j - \bar{h}\right)\sin\omega t_j = \sum_{j=1}^{N} h_j \sin\omega t_j - \sum_{j=1}^{N}\bar{h}\sin\omega t_j$$

$$\Phi_2 = \sum_{j=1}^{N} \cos 2\omega t_j$$

$$\Gamma_2 = \sum_{j=1}^{N} \sin 2\omega t_j$$

   ■ and then the periodogram $P_N$ using the formula:

$$P_N(\omega) = \frac{1}{2\sigma^2}\left\{ \frac{\left[\Phi\cos\omega\tau + \Gamma\sin\omega\tau\right]^2}{\frac{N}{2} + \frac{1}{2}\Phi_2\cos 2\omega\tau + \frac{1}{2}\Gamma_2\sin 2\omega\tau} + \frac{\left[\Gamma\cos\omega\tau - \Phi\sin\omega\tau\right]^2}{\frac{N}{2} - \frac{1}{2}\Phi_2\cos 2\omega\tau - \frac{1}{2}\Gamma_2\sin 2\omega\tau} \right\} \; ,$$

- updating the RTT.

2. The method of claim 1, where N is greater than 200.

3. The method of claim 1 or 2 where the values of $\omega_1$ and $\omega_2$ are determined using the formulas:

$$T = \underset{k}{Max}(t_k) - \underset{k}{Min}(t_k), \quad \omega_1 = \frac{2\pi}{T}, \quad \text{and} \quad \omega_2 = \frac{N\pi}{T}$$

4. The method of any one of claims 1 to 3 where the trigonometric functions sine and cosine are tabulated storing pre computed pairs [angle $\alpha$, value of $\sin\alpha$]; a value $\sin\alpha'$ of a given angle $\alpha'$ being determined by taking the value $\sin\alpha$ corresponding to the value $\alpha$ closest to $\alpha'$.

5. The method of any one of claims 1 to 4, where the extracting step comprises:

- populating a list comprising the first W pulsation peaks corresponding to the W highest spectral powers $P_N$ of said periodogram and
- searching interactively for a pulsation, among the W pulsations, that is a least common divisor for the others pulsations, said pulsation being the fundamental pulsation $\omega_0$.

6. The method of claim 5, where a peak is determined at a pulsation $\omega_k$, if $P_N(\omega_k) > F_N(\omega_{k-1})$ and $P_N(\omega_k) > P_N(\omega_{k+1})$.

7. The method of claim 5 or 6, where the populating step discards pulsation peaks not comprised in a range [$\omega_{min}$, $\omega_{max}$].

8. The method of claim 7, where the high boundary $\omega_{max}$ corresponds to a minimum value of RTT of 2ms and the low boundary $\omega_{min}$ corresponds to a maximum value of RTT of 500ms.

9. The method of any one of claims 5 to 8, where the searching step comprises:

- ordering said list of W pulsations peaks,
- iterating, starting from the lowest pulsation:

o checking if said pulsation has at least two multiples in the list, then stop iterating and return said pulsation as the fundamental pulsation $\omega_0$,
o if not, steps to the next pulsation in the list.

10. The method of any one of claims 5 to 9, further comprising, before the extracting step, a step of smoothing the periodogram by applying a low pass filter.

11. The method of any one of claims 5 to 10, further comprising, after the extracting step, a step of filtering the extracted fundamental pulsation $\omega_0$ with respect to the history of previously extracted fundamental pulsations.

12. The method of claim 11, where the filtering step compares an average $\overline{\omega_0}$ of the previous fundamental pulsations to the last extracted fundamental pulsation $\omega_0$, returning the fundamental pulsation $\omega_0$ if it does not differ from the average $\overline{\omega_0}$ from a given percentage, returning the average $\overline{\omega_0}$ either.

13. The method of any one of claims 5 to 12, where W = 10.

**Patentansprüche**

1. Verfahren für ein Paketflusskommunikationssystem zum Schätzen einer Umlaufzeit RTT eines beobachteten Paketflusses, welche die Zeit zwischen der Ausgabe eines Pakets und der Ankunft seiner Bestätigung ist, umfassend die folgenden Schritte:

- Erfassen eines Zwischenankunftszeitsignals X zwischen benachbarten Paketen, wobei die Amplitude $h_k$ des Signals X zum Zeitpunkt $t_k$ der Ankunft eines Pakets gleich der verstrichenen Dauer seit der Ankunftszeit $t_{k-1}$

eines vorherigen Pakets ist, das heißt X $(t_k)$ = $h_k$ = $t_k$ - $t_{k-1}$,
- Berechnen eines Periodogramms $P_N$ auf der Basis von N Abtastwerten $h_1$, $h_2$...$h_N$ des Signals X unter Verwendung eines Lomb-Scargle-Verfahrens durch:

○ Berechnen eines Mittelwerts $\bar{h}$ und einer Varianz $\sigma^2$ für die N Abtastwerte $h_1$, $h_2$ ... $h_N$ unter Verwendung der folgenden Formeln:

$$\bar{h} = \frac{1}{N}\sum_{i=1}^{N} h_i \quad \text{und} \quad \sigma^2 = \frac{1}{N-1}\sum_{i=1}^{N}\left(h_i - \bar{h}\right)^2 ,$$

○ Berechnen für 2N Werte von Pulsation ω, die in einem Bereich [$\omega_1$, $\omega_2$] genommen werden:

• eines Wertes τ für die N Abtastwerte $h_1$, $h_2$ ... $h_N$ unter Verwendung der folgenden Formel:

$$\tan(2\omega\tau) = \frac{\sum_{j=1}^{N}\sin 2\omega t_j}{\sum_{j=1}^{N}\cos 2\omega t_j} ,$$

• des Periodogramms $P_N$ unter Verwendung der folgenden Formel:

$$P_N(\omega) = \frac{1}{2\sigma^2}\left\{ \frac{\left[\sum_{j=1}^{N}\left(h_j - \bar{h}\right)\cos\omega\left(t_j - \tau\right)\right]^2}{\sum_{j=1}^{N}\cos^2\omega\left(t_j - \tau\right)} + \frac{\left[\sum_{j=1}^{N}\left(h_j - \bar{h}\right)\sin\omega\left(t_j - \tau\right)\right]^2}{\sum_{j=1}^{N}\sin^2\omega\left(t_j - \tau\right)} \right\}$$

- Extrahieren einer Grundpulsation $\omega_0$ aus dem Periodogramm $P_N$ unter Verwendung einer Mustervergleichstechnik,
- Bestimmen der RTT aus der Grundpulsation $\omega_0$,
**dadurch gekennzeichnet, dass** es ferner in Echtzeit bei jeder Ankunft eines neuen Pakets die folgenden Schritte umfasst:

- Erfassen eines neuen Abtastwerts $h_n$ des Signals X,
- Verschieben des Satzes von Abtastwerten $h_1$, $h_2$...$h_N$ durch:

○ Verwerfen des ältesten Abtastwerts $h_1$ und
○ für k = 1...N-1, $h_k$ = $h_{k+1}$
○ Ersetzen von $h_N$ durch den neuen Abtastwert $h_n$, damit der Satz von Abtastwerten noch die N neuesten Abtastwerte umfasst,

- Aktualisieren des Periodogramms $P_N$ auf der Basis der N neuesten Abtastwerte $h_1$, $h_2$...$h_N$ des Signals X durch:

○ Berechnen des Mittelwerts $\bar{h}$ und einer Varianz $\sigma^2$ für die N Abtastwerte $h_1$, $h_2$ ... hN unter Verwendung der folgenden Formeln:

$$\overline{h} = \frac{1}{N}\sum_{i=1}^{N} h_i \qquad \text{und} \qquad \sigma^2 = \frac{1}{N-1}\sum_{i=1}^{N} h_i^2 - \frac{N}{N-1}\overline{h}^2 \; ,$$

○ Aktualisieren für 2N Werte von Pulsation $\omega$, die in einem Bereich $[\omega_1, \omega_2]$ genommen werden:

• des Wertes $\tau$ für die N Abtastwerte $h_1$, $h_2$ ... $h_N$ unter Verwendung der folgenden Formel:

$$\tan(2\omega\tau) = \frac{\sum_{j=1}^{N} \sin 2\omega t_j}{\sum_{j=1}^{N} \cos 2\omega t_j} \; ,$$

• der Werte $\Phi$, $\Gamma$, $\Phi_2$, $\Gamma_2$ unter Verwendung der folgenden Formeln:

$$\Phi = \sum_{j=1}^{N} \left(h_j - \overline{h}\right)\cos\omega t_j = \sum_{j=1}^{N} h_j \cos\omega t_j - \sum_{j=1}^{N} \overline{h}\cos\omega t_j$$

$$\Gamma = \sum_{j=1}^{N} \left(h_j - \overline{h}\right)\sin\omega t_j = \sum_{j=1}^{N} h_j \sin\omega t_j - \sum_{j=1}^{N} \overline{h}\sin\omega t_j$$

$$\Phi_2 = \sum_{j=1}^{N} \cos 2\omega t_j$$

$$\Gamma_2 = \sum_{j=1}^{N} \sin 2\omega t_j$$

• und anschließend des Periodogramms $P_N$ unter Verwendung der folgenden Formel:

$$P_N(\omega) = \frac{1}{2\sigma^2}\left\{ \frac{\left[\Phi\cos\omega\tau + \Gamma\sin\omega\tau\right]^2}{\frac{N}{2} + \frac{1}{2}\Phi_2\cos 2\omega\tau + \frac{1}{2}\Gamma_2\sin 2\omega\tau} + \frac{\left[\Gamma\cos\omega\tau - \Phi\sin\omega\tau\right]^2}{\frac{N}{2} - \frac{1}{2}\Phi_2\cos 2\omega\tau - \frac{1}{2}\Gamma_2\sin 2\omega\tau} \right\} ,$$

- Aktualisieren der RTT.

**2.** Verfahren nach Anspruch 1, wobei N größer als 200 ist.

**3.** Verfahren nach Anspruch 1 oder 2, wobei die Werte von $\omega_1$ und $\omega_2$ unter Verwendung der folgenden Formeln bestimmt werden:

$$T = \underset{k}{Max}(t_k) - \underset{k}{Min}(t_k), \quad \omega_1 = \frac{2\pi}{T} \quad \text{und} \quad \omega_1 = \frac{N\pi}{T}$$

**4.** Verfahren nach einem der Ansprüche 1 bis 3, wobei die trigonometrischen Funktionen Sinus und Cosinus unter Speicherung von im Voraus berechneten Paaren [Winkel $\alpha$, Wert von $\sin\alpha$] tabellarisiert werden; wobei ein Wert $\sin\alpha'$ eines gegebenen Winkels $\alpha'$ durch Heranziehen des Wertes $\sin\alpha$ bestimmt wird, der dem Wert $\alpha$ entspricht, der $\alpha'$ am nächsten ist.

**5.** Verfahren nach einem der Ansprüche 1 bis 4, wobei der Extraktionsschritt umfasst:

- Bestücken einer Liste mit den ersten W Pulsationsspitzen, die den W höchsten Spektralleistungen $P_N$ des Periodogramms entsprechen und
- interaktives Suchen nach einer Pulsation unter den W Pulsationen, die der kleinste gemeinsame Teiler für die anderen Pulsationen ist, wobei die Pulsation die Grundpulsation $\omega_0$ ist.

**6.** Verfahren nach Anspruch 5, wobei eine Spitze bei einer Pulsation $\omega_k$ bestimmt wird, wenn $P_N(\omega_k) > P_N(\omega_{k-1})$ und $P_N(\omega_k) > P_N(\omega_{k+1})$.

**7.** Verfahren nach Anspruch 5 oder 6, wobei der Bestückungsschritt Pulsationsspitzen verwirft, die nicht in einem Bereich [$\omega_{min}$, $\omega_{max}$] enthalten sind.

**8.** Verfahren nach Anspruch 7, wobei die obere Grenze einem Mindestwert von RTT von 2 ms entspricht, und die untere Grenze $\omega_{min}$ einem Höchstwert von RTT von 500 ms entspricht.

**9.** Verfahren nach einem der Ansprüche 5 bis 8, wobei der Suchschritt umfasst:

- Ordnen der Liste von W Pulsationsspitzen,
- Wiederholen ausgehend von der niedrigsten Pulsation:

○ eines Prüfens, ob die Pulsation mindestens zwei Vielfache in der Liste aufweist, anschließenden Anhaltens und Retournierens der Pulsation als die Grundpulsation $\omega_0$,
○ von Schritten zur nächsten Pulsation in der Liste, falls dies nicht der Fall ist.

**10.** Verfahren nach einem der Ansprüche 5 bis 9, ferner umfassend vor dem Extraktionsschritt einen Schritt des Glättens des Periodogramms durch Anwenden eines Tiefpassfilters.

**11.** Verfahren nach einem der Ansprüche 5 bis 10, ferner umfassend nach dem Extraktionsschritt einen Schritt des Filterns der extrahierten Grundpulsation $\omega_0$ in Bezug auf den Verlauf der vorher extrahierten Grundpulsationen.

**12.** Verfahren nach Anspruch 11, wobei der Filterungsschritt einen Durchschnittswert $\overline{\omega_0}$ der vorherigen Grundpulsationen mit der letzten extrahierten Grundpulsation $\omega_0$ vergleicht, wobei die Grundpulsation $\omega_0$ retourniert wird, wenn sie sich nicht vom Durchschnittswert $\overline{\omega_0}$ von einem gegebenen Prozentsatz unterscheidet, und auch der Durchschnittswert $\overline{\omega_0}$ retourniert wird.

**13.** Verfahren nach einem der Ansprüche 5 bis 12, wobei W = 10.

**Revendications**

1. Procédé, pour un système de communication de flux de paquets, destiné à estimer un temps de propagation aller-retour, RTT, d'un flux de paquets observé, c'est-à-dire le temps écoulé entre l'émission d'un paquet et l'arrivée de son accusé de réception, comprenant les étapes ci-dessous consistant à :

   - recueillir un signal X de temps « entre les arrivées » entre des paquets adjacents, où l'amplitude $h_k$ dudit signal X à l'instant $t_k$ d'arrivée d'un paquet est égale à la durée écoulée depuis le temps d'arrivée $t_{k-1}$ d'un paquet précédent, c'est-à-dire $X(t_k) = h_k = t_k - t_{k-1}$,
   - calculer un périodogramme $P_N$ sur la base de N échantillons $h_1$, $h_2$, ..., $h_N$ dudit signal X, en faisant appel à un procédé Lomb-Scargle, en :

      o calculant une moyenne $\overline{h}$ et une variance $\sigma^2$ pour les N échantillons $h_1$, $h_2$,

         . .., hN en utilisant les formules :

$$\overline{h} = \frac{1}{N}\sum_{i=1}^{N} h_i \quad \text{et} \quad \sigma^2 = \frac{1}{N-1}\sum_{i=1}^{N}\left(h_i - \overline{h}\right)^2 ,$$

      o calculant pour 2N valeurs de pulsation $\omega$ pris dans une plage $[\omega_1, \omega_2]$ :

         ■ une valeur $\tau$ pour les N échantillons $h_1$, $h_2$, ..., $h_N$ en utilisant la formule ci-dessous :

$$\tan(2\omega\tau) = \frac{\sum_{j=1}^{N}\sin 2\omega t_j}{\sum_{j=1}^{N}\cos 2\omega t_j},$$

         ■ le périodogramme $P_N$ en utilisant la formule ci-dessous :

$$P_N(\omega) = \frac{1}{2\sigma^2}\left\{\frac{\left[\sum_{j=1}^{N}\left(h_j - \overline{h}\right)\cos\omega\left(t_j - \tau\right)\right]^2}{\sum_{j=1}^{N}\cos^2\omega\left(t_j - \tau\right)} + \frac{\left[\sum_{j=1}^{N}\left(h_j - \overline{h}\right)\sin\omega\left(t_j - \tau\right)\right]^2}{\sum_{j=1}^{N}\sin^2\omega\left(t_j - \tau\right)}\right\}$$

   - extraire une pulsation fondamentale $\omega_0$ dudit périodogramme $P_N$ en utilisant une technique de mise en concordance de modèles ;
   - déterminer le temps de propagation RTT à partir de ladite pulsation fondamentale $\omega_0$ ;
   **caractérisé en ce qu'**il comprend en outre, en temps réel, à chaque arrivée d'un nouveau paquet, les étapes ci-dessous consistant à :
   - recueillir un nouvel échantillon $h_n$ de signal X ;
   - décaler l'ensemble d'échantillons $h_1$, $h_2$, ..., $h_N$ en :

      o abandonnant l'échantillon le plus ancien $h_1$ ; et
      o pour k =1, ..., N-1, $h_k = h_{k+1}$;
      o remplaçant $h_N$ par le nouvel échantillon $h_n$;
      de sorte que ledit ensemble d'échantillons comprend encore les N échantillons les plus récents ;

   - actualiser le périodogramme $P_N$ sur la base des N échantillons les plus récents $h_1$, $h_2$, ..., $h_N$ de signal X en :

o actualisant la moyenne $\overline{h}$ et la variance $\sigma^2$ pour les N échantillons $h_1$, $h_2$, ..., $h_N$ en utilisant les formules ci-dessous :

$$\overline{h} = \frac{1}{N}\sum_{i=1}^{N} h_i \quad \text{et} \quad \sigma^2 = \frac{1}{N-1}\sum_{i=1}^{N} h_i^2 - \frac{N}{N-1}\overline{h}^2 \, ,$$

o actualisant pour 2N valeurs de pulsation $\omega$ pris dans une plage $[\omega_1, \omega_2]$ :

■ la valeur $\tau$ pour les N échantillons $h_1$, $h_2$, ..., $h_N$ en utilisant la formule ci-dessous :

$$\tan(2\omega\tau) = \frac{\sum_{j=1}^{N} \sin 2\omega t_j}{\sum_{j=1}^{N} \cos 2\omega t_j} \, ,$$

■ les valeurs $\Phi$, $\Gamma$, $\Phi_2$, $\Gamma_2$, en utilisant les formules ci-dessous :

$$\Phi = \sum_{j=1}^{N}\left(h_j - \overline{h}\right)\cos\omega t_j = \sum_{j=1}^{N} h_j \cos\omega t_j - \sum_{j=1}^{N} \overline{h}\cos\omega t_j$$

$$\Gamma = \sum_{j=1}^{N}\left(h_j - \overline{h}\right)\sin\omega t_j = \sum_{j=1}^{N} h_j \sin\omega t_j - \sum_{j=1}^{N} \overline{h}\sin\omega t_j$$

$$\Phi_2 = \sum_{j=1}^{N} \cos 2\omega t_j$$

$$\Gamma_2 = \sum_{j=1}^{N} \sin 2\omega t_j$$

■ et ensuite le périodogramme $P_N$ en utilisant la formule ci-dessous :

$$P_N(\omega) = \frac{1}{2\sigma^2}\left\{\frac{[\Phi\cos\omega\tau + \Gamma\sin\omega\tau]^2}{\frac{N}{2} + \frac{1}{2}\Phi_2\cos 2\omega\tau + \frac{1}{2}\Gamma_2\sin 2\omega\tau} + \frac{[\Gamma\cos\omega\tau - \Phi\sin\omega\tau]^2}{\frac{N}{2} - \frac{1}{2}\Phi_2\cos 2\omega\tau - \frac{1}{2}\Gamma_2\sin 2\omega\tau}\right\} \, ,$$

- actualiser le temps de propagation RTT.

**2.** Procédé selon la revendication 1, où la valeur de N est supérieure à 200.

**3.** Procédé selon la revendication 1 ou 2, où les valeurs de $\omega_1$, et $\omega_2$ sont déterminées en utilisant les formules ci-dessous :

$$T = \underset{k}{Max}(t_k) - \underset{k}{Min}(t_k), \quad \omega_1 = \frac{2\pi}{T}, \quad \text{et} \quad \omega_2 = \frac{N\pi}{T}$$

**4.** Procédé selon l'une quelconque des revendications 1 à 3, où les fonctions trigonométriques sinus et cosinus sont classées en stockant des paires précalculées [angle $\alpha$, valeur de $\sin\alpha$] ; une valeur $\sin\alpha'$ d'un angle donné $\alpha'$ étant déterminée en prenant la valeur $\sin\alpha$ correspondant à la valeur $\alpha$ la plus proche de $\alpha'$.

**5.** Procédé selon l'une quelconque des revendications 1 à 4, où l'étape d'extraction comprend les étapes ci-dessous consistant à :

- remplir une liste comprenant les premières W crêtes de pulsation correspondant aux W puissances spectrales $P_N$ les plus élevées dudit périodogramme ; et
- rechercher de manière interactive une pulsation, parmi les W pulsations, qui représente le plus petit diviseur commun pour les autres pulsations, ladite pulsation étant la pulsation fondamentale $\omega_0$.

**6.** Procédé selon la revendication 5, où une crête est déterminée à une pulsation $\omega_k$, si $P_N(\omega_k) > P_N(\omega_{k-1})$ et $P_N(\omega_k) > P_N(\omega_{k+1})$.

**7.** Procédé selon la revendication 5 ou 6, où l'étape de remplissage abandonne les crêtes de pulsation non comprises dans une plage [$\omega_{min}$, $\omega_{max}$]

**8.** Procédé selon la revendication 7, où la limite supérieure $\omega_{max}$ correspond à une valeur minimale de temps de propagation RTT de 2 ms et où la limite inférieure $\omega_{min}$ correspond à une valeur maximale de temps de propagation RTT de 500 ms.

**9.** Procédé selon l'une quelconque des revendications 5 à 8, où l'étape de recherche comprend les étapes ci-dessous consistant à :

- ordonnancer ladite liste de W crêtes de pulsation ;
- itérer, en commençant par la plus faible pulsation :

o vérifier si ladite pulsation présente au moins deux multiples dans la liste, et mettre ensuite fin à l'étape d'itération et retourner ladite pulsation en tant que la pulsation fondamentale $\omega_0$ ;
o sinon, passer à la pulsation suivante dans la liste.

**10.** Procédé selon l'une quelconque des revendications 5 à 9, comprenant en outre, avant l'étape d'extraction, une étape de lissage du périodogramme mise en oeuvre en appliquant un filtre passe-bas.

**11.** Procédé selon l'une quelconque des revendications 5 à 10, comprenant en outre, après l'étape d'extraction, une étape de filtrage de la pulsation fondamentale extraite $\omega_0$ relativement à l'historique des pulsations fondamentales extraites précédemment.

**12.** Procédé selon la revendication 11, où l'étape de filtrage compare une moyenne $\overline{\omega_0}$ des pulsations fondamentales précédentes à la dernière pulsation fondamentale extraite $\omega_0$, et retourne la pulsation fondamentale $\omega_0$ si elle ne diffère pas de la moyenne $\overline{\omega_0}$ d'un pourcentage donné, ce qui retourne également la moyenne $\overline{\omega_0}$.

**13.** Procédé selon l'une quelconque des revendications 5 à 12, où W = 10.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y.Zhang ; L.Breslau ; V.Paxson ; S.Shenker.** On the Characteristics and Origins of Internet Flow Rates. *Proc. of ACM SIGCOMM, Pittsburgh, PA, USA,* August 2002

- **R.Lance ; I.Frommer ; B.Hunt ; E.Ott ; J.A.Yorke ; E.Harder.** Round-trip time inference via passive monitoring. *ACM Sigmetrics Performance Evaluation Review,* December 2005, vol. 33 (3), 32-38